# EUROPÄISCHE PATENTANMELDUNG

(11) **EP 1 353 152 A2**
(43) Veröffentlichungstag der Anmeldung: **15.10.2003**
(21) Anmeldenummer: 03014904.1
(22) Anmeldetag: 18.07.2001
(51) Int. Cl.: G01D 5/20

(54) **Spulenanordnung für eine Mechatronik**

(30) Priorität: 14.10.2000 DE 10051048
(62) Teilanmeldung aus: 01117317.6
(71) Anmelder: WABCO GmbH & CO. OHG, 30453 Hannover (DE)
(72) Erfinder: Sohn, Robert, 30559 Hannover (DE)
(74) Vertreter: Schrödter, Manfred

(57) **Zusammenfassung**

Es wird eine Spulenanordnung für eine Mechatronik (1) vorgeschlagen, die mindestens ein elektromagnetisch betätigtes Bauteil (2) mit einer oder mehreren Magnetspulen (14) enthält, sowie eine integrierte Elekronik (3) aufweist, die mit mindestens einem Sensor (4, 5) verbunden ist, welcher als induktiver Sensor mit einer Spule (4) ausgebildet ist. Zur Verhinderung einer Auswertungsstörung des Sensors (4, 5) durch das elektromagnetisch betätigte Bauteil (2) sind die Achsen der Magnetspulen (14) und der Sensorspule (4) rechtwinklig zueinander angeordnet.

## Beschreibung

Die Erfindung bezieht sich auf eine Spulananordnung für eine Mechatronik gemäß dem Oberbegriff des Patentanspruchs 1.

Eine derartige Mechatronik ist beispielsweise aus der DE-A 100 22 124 bekannt. Sie enthält in einem gemeinsamen Gehäuse, das beispielsweise aus Aluminium bestehen kann, eine Elektronik und ein elektromechanisches Bauteil, beispielsweise ein Magnetventil. Die Elektronik ist mechanisch auf einer Leiterplatte aufgebaut, die sich in einem besonderen Abteil des Mechatronik-Gehäuses befindet. Auf der Leiterplatte sind in bekannter Weise elektronische Bauelemente (Widerstände, Kondensatoren, Transistoren, Mikrocontroller) aufgelötet. Zu den elektronischen Bauelementen können auch Sensoren gehören, die beispielsweise Wege, Drücke oder Temperaturen messen können.

Aus der DE-A 33 43 885 ist ein induktiver Wegsensor bekannt, der aus einer Spule mit einem wegabhängig verschiebbaren Kern besteht. Der jeweils eingestellte Weg wird zu diskreten Zeitpunkten dadurch ermittelt, daß die Spule mit einem Spannungssprung angeregt wird und der sich dabei entwickelnde Ladestrom beobachtet wird. Dabei ist die jeweilige Induktivität ein Maß für den Weg. Bei der bekannten Anordnung wird die Spule von einem Mikrocontroller angestoßen und die Aufladezeit der Spule von demselben Mikrocontroller in den zu messenden Weg umgerechnet.

Bei einer Mechatronik, welche ein magnetisch zu betätigendes Bauteil, wie z. B. ein Magnetventil, ein Relais, oder einen Stellmagneten enthält, besteht die Gefahr, daß durch elektromagnetische Koppelungen ein in der Elektronik enthaltener induktiver Sensor durch die o. g. elektromechanischen Bauteile gestört werden kann. Insbesondere kann die Meßspannung des induktiven Sensors durch magnetisch induzierte Störspannungen beeinflußt werden. Dadurch können die sich ergebenden Sensorwerte verfälscht werden. Daneben sind auch Störungen bzw. Beeinflussungen durch elektrische Felder möglich.

Es ist zwar bekannt, induktive Sensoren gegen Fremdfelder abzuschirmen (DE-A 196 24 801), solche Maßnahmen bedeuten jedoch einen erhöhten Aufwand.

Der Erfindung liegt die Aufgabe zugrunde, in einer Mechatronik mit eingebautem Sensor die oben beschriebenen Störungsmöglichkeiten mit geringem Aufwand zu verhindern oder mindestens abzumildern.

Diese Aufgabe wird durch die im Patentanspruch 1 enthaltene Erfindung gelöst. Die Unteransprüche enthalten zweckmäßige Weiterbildungen.

Die Erfindung wird im folgenden anhand einer Zeichnung näher erläutert.

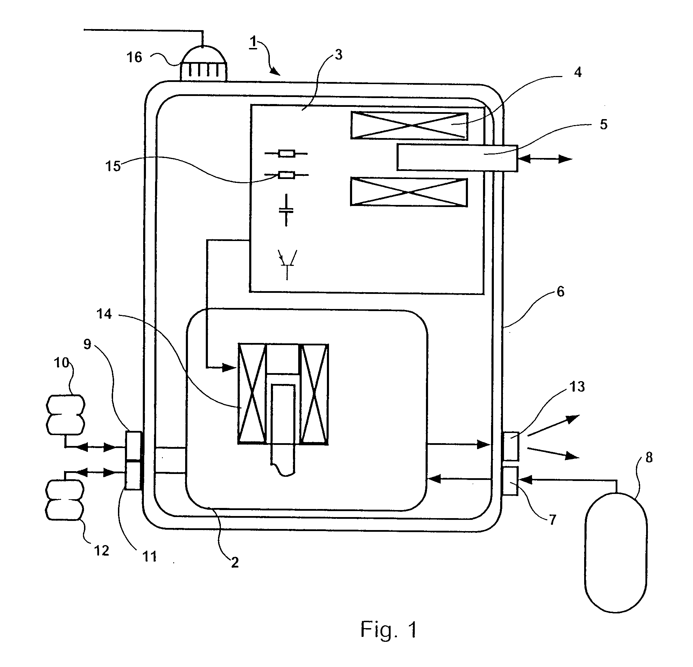

Diese zeigt in
- Fig. 1: eine schematische Darstellung einer Mechatronik mit einem Magnetventil und einer Elektronik mit Wegsensor in einem gemeinsamen Gehäuse.

Die Fig. 1 zeigt in schematischer Darstellung eine sogenannte Mechatronik (1), welche in einem gemeinsamen Gehäuse (6) mechanische Bauteile, hier ein Magnetventil (2), sowie eine Elektronik (3) enthält. Im dargestellten Ausführungsbeispiel dient die Mechatronik (1) zur Niveauregulierung in einem Kraftfahrzeug. Hierzu ist an einem ersten Druckanschluß (7) ein Druckluftvorrat (8) angeschlossen. An einem zweiten Druckanschluß (9) ist eine erste Luftfeder (10) angeschlossen. An einem dritten Druckanschluß (11) ist eine zweite Luftfeder (12) angeschlossen. Die beiden Luftfedern (10, 12) sind zwischen einer Achse und dem Aufbau eines Nutzfahrzeugs angeordnet, und dienen sowohl zur Abfederung als auch zur Einstellung bzw. zur Konstanthaltung des Abstandes (Niveaus) zwischen Achse und Aufbau.

Über einen vierten Druckanschluß (13) kann das Magnetventil (2) bei Bedarf Druckluft ins Freie ablassen.

Das Magnetventil (2) enthält eine oder mehrere Magnetspulen (14), mit Hilfe derer ein oder mehrere Ventil-Schließglieder (nicht dargestellt) betätigt werden können.

Die Elektronik (3) enthält elektronische Bauelemente (15), wie z. B. Widerstände, Kondensatoren, oder Mikroprozessoren. Weiter enthält die Elektronik (3) einen oder mehrere Wegsensoren (4, 5), mit welchen beispielsweise der Abstand zwischen der Fahrzeugachse und dem -Aufbau gemessen werden kann.

Im vorliegenden Fall ist der Wegsensor in an sich bekannter Weise als induktiver Wegsensor ausgebildet mit einer Spule (4) und einem in der Spule verschiebbaren Kern (5).

Die Mechatronik (1) weist schließlich noch einen elektrischen Anschluß (16) auf, über den die Betriebsspannung für die Elektronik (3) und das Magnetventil (2) sowie Steuerbefehle zuführbar sind.

Die elektrische Auswertung des Wegsensors (4, 5) bzw. der Meßvorgang erfolgt zu diskreten Zeitpunkten.

Um die oben beschriebene Störung des Sensors (4, 5) durch die Magnetspule (14) zu verringern, sind erfindungsgemäß die Achsen der Spulen (4 und 14) der Mechatronik (1) gemäß Fig. 1 rechtwinklig zueinander angeordnet.

Zweckmäßig ist, wie oben bereits angeführt, das elektromagnetisch betätigbare Bauteil (2) ein Magnetventil, welches z.B. innerhalb einer Niveauregulierung eines Kraftfahrzeugs eingesetzt werden kann.

Der Sensor (4, 5) ist zweckmäßig als induktiver Wegoder Winkelsensor ausgebildet. Seine Auswertung erfolgt zweckmäßig mittels einer Laufzeitmessung der Auf- oder Entladezeit seiner Induktivität, wie in der o. g. DE-A 33 43 885 näher beschrieben.

## Patentansprüche

1. Spulenanordnung für eine Mechatronik (1) mit mindestens einem elektromagnetisch betätigten Bauteil (2), das eine oder mehrere Magnetspulen (14) enthält, und mit einer eingebauten Elektronik (3) mit mindestens einem Sensor (4, 5), welcher als induktiver Sensor mit einer Spule (4) ausgebildet ist,
**dadurch gekennzeichnet,**
**daß** die Achsen der Magnetspulen (14) und der Sensorspule (4) rechtwinklig zueinander angeordnet sind.

2. Spulenanordnung nach Anspruch 1,
**dadurch gekennzeichnet,**
**daß** das elektromagnetisch betätigbare Bauteil (2) ein Magnetventil ist.

3. Spulenanordnung nach Anspruch 1 bis 2,
**dadurch gekennzeichnet,**
**daß** der Sensor (4, 5) ein induktiver Weg- oder Winkelsensor ist.

4. Spulenanordnung nach Anspruch 1 bis 3,
**dadurch gekennzeichnet,**
**daß** der Sensor (4, 5) mittels einer Laufzeitmessung der Auf- oder Entladung seiner Induktivität ausgewertet wird.
